# EUROPÄISCHE PATENTANMELDUNG

(11) **EP 2 246 172 A2**
(43) Veröffentlichungstag der Anmeldung: **03.11.2010**
(21) Anmeldenummer: 10156449.0
(22) Anmeldetag: 12.03.2010
(51) Int. Cl.: B29C 44/08, B29C 44/34, B29C 44/44

(54) **Verfahren zur Herstellung von Leichtbauteilen aus geschäumtem Kunststoff**

(30) Priorität: 16.03.2009 DE 102009003622
(71) Anmelder: Lucobit AG, 50389 Wesseling (DE); Odenwald-Chemie GmbH, 69250 Schöngau (DE)
(72) Erfinder: Riegler, Robert, 67459 Böhl-Iggelheim (DE); Augele, Hans-Peter, 69118 Heidelberg (DE); Kohn, Sandro, Dr., 53127 Bonn (DE); Herz, Richard, 74193 Schwaigern-Massenbach (DE)
(74) Vertreter: Bungartz, Klaus Peter

(57) **Zusammenfassung**

Die Erfindung betrifft ein Verfahren zur Herstellung von Leichtbauteilen auf geschäumten Kunststoff mit einem Volumengewicht zwischen 15 und 200 kg/m³. Ferner betrifft die Erfindung gasbeladene Vorformlinge und Granulate. Bisher wurden solche Bauteile aus vorgefertigtem Schaumstoff hergestellt oder es wurden luftgefüllte Elemente zur Reduktion des Gewichtes zugegeben. Dies hat entweder den Nachteil einer aufwändigen Vorproduktion oder eines aufwändigen Verfahrens des Aufschäumens.

Die Erfindung vermeidet dies dadurch, dass dem plastifizierten Kunststoff ein Treibmittel zugesetzt wird und diese Mischung dann entweder unmittelbar im Spritzguss in eine Form gegeben und dann über eine Aktivierung des Treibmittels aufgeschäumt wird oder dass der treibmittelbeladene Kunststoff als Zwischenprodukt zunächst abgekühlt und dann später in einer Form unter Wärmeeinwirkung aufgeschmolzen und aufgeschäumt wird.

## Beschreibung

Die Erfindung betrifft ein Verfahren zur Herstellung von Leichtbauteilen auf geschäumten Kunststoff mit einem Volumengewicht zwischen 15 und 200 kg/m³. Ferner betrifft die Erfindung ein Verfahren zur Herstellung eines gasbeladenen Granulates oder Vorformlings und ein solches Granulat bzw. einen solchen Vorformling.

Leichtbauteile aus Schaumstoff der oben genannten Art werden aus unterschiedlichen Werkstoffen hergestellt, und können verschiedenen Zwecken dienen. Beispielsweise ist es im Maschinenbau oder im Automobilbau möglich, dass solche Schaumstoffteile Hohlräume ausfüllen, um beispielsweise Luftschallausbreitungen, Vibrationsgeräusche oder Geräusche durch bewegliche Teile, wie beispielsweise Kabelstränge oder ähnlichem, zu vermeiden. Ferner können solche Schaumstoffteile als Dämpfungselemente, zum Beispiel im Bereich einer Spiegelhalterung oder Anzeigen einer Armatur verwendet werden. Schließlich ist es möglich, dass diese Bauteile auch mechanische Aufgaben übernehmen, beispielsweise um Blenden, Spiegel, oder sonstige Funktionselemente aufzunehmen und zu halten. In solchen Fällen können die Schaumteile auch mechanisch verstärkt sein oder in feste Gehäuse eingebaut werden.

### Stand der Technik

Die Herstellung von Bauteilen aus reaktiven Schäumen ist allgemein bekannt. Ein solches Verfahren ist aus der WO 03/047951 Abekannt. Hierbei wird ein geeigneter Kunststoff, beispielsweise ein Pentan zusammen mit einem Treibmittel, beispielsweise mit einem Polyisocyanat in eine Form eingespritzt, wobei auf Grund von Wärme oder Druck eine Reaktion auftritt, die ein Aufschäumen des Kunststoffes bewirkt. Auf diese Weise lassen sich formstabile Schaumbaueile mit einem Volumengewicht von mehr als 500 ^{kg}/ₘ₃ herstellen. Solche Formbauteile werden beispielsweise im Automobilbau für den Aufbau des Armaturenbrettes oder für Verkleidungsteile im Innenraum verwendet.

Die Formteile aus reaktiven Schäumen haben jedoch den Nachteil, dass zur Vermeidung eines integralen Dichteverlaufes und damit einer Gewichtsanreicherung im Bereich der Wandflächen des Formteils ein recht aufwendiger Prozess geführt werden muss und darüber hinaus das Flächengewicht für viele Anwendungen zu hoch ist. Gerade durch die Bestrebungen zur Energieeinsparung ist es bevorzugt, Gewicht nur dort zu akzeptieren, wo es in Folge der geforderten Eigenschaften des Bauteils auch erforderlich ist. Bei vielen Anwendungen kann jedoch das Gewicht des Bauteils weiter reduziert werden, insbesondere dann, wenn das Bauteil als Verbindungsschicht oder als Schwingungsdämpfer eingesetzt werden soll. Erst recht sind eine Gewichtreduzierung und eine größere Porosität des Schaums gewünscht, wenn das Bauteil beispielsweise als Schwimmkörper eingesetzt werden soll. Wenn das Volumengewicht eines herkömmlichen reaktiven Schaumproduktes zu groß ist, leiden also diese Produkte unter dem Nachteil, dass unnötiges Gewicht in Kauf genommen werden muss.

Zur Vermeidung dieses Nachteils wurde versucht, einen leichtgewichtigeren Schaum herzustellen. Ein solches Verfahren ist in der DE 10046298 Abeschrieben. Bei diesem Verfahren werden zur Herstellung von Leichtbau-Werkstoffen Leichtgranulate eingesetzt, die aus einem mineralischen Schaumgranulat und einem organischen Bindemittel bestehen. Hier werden nur kleine Granulatkörper in das Bindemittel eingegeben, um so die Dichte des Bindemittels zu senken. Dieses Verfahren hat jedoch den Nachteil, dass, wie auch bei den reaktiven Schäumen, ein Zweikomponentenwerkstoff verarbeitet werden muss. Darüber hinaus besitzt auch das mineralische Schaumgranulat ein gewisses Eigengewicht und insbesondere einen Einfluss auf die physikalischen Eigenschaften des Schaums, die nicht in alle Fällen gewünscht ist.

Der Nachteil dieses Verfahrens besteht also darin, dass die Herstellungskosten vergleichsweise hoch sind und auf Grund des Zweikomponentenwerkstoffes kein sortenreiner Werkstoff mehr vorliegt, und insbesondere bei der Entsorgung mit Problemen verbunden ist. Darüber hinaus ist die erzielbare Gewichtsreduktion dieses Werkstoffes Prinzip-bedingt begrenzt.

Ein weiteres Verfahren zur Vermeidung von unnötigem Gewicht beinhaltet die Verwendung von hohlen Minikugeln, die dem Kunststoffwerkstoff beigegeben werden. Dieses Verfahren ist aus der US 3585157 bekannt. Bei diesem Verfahren werden einem thermoplastischen Werkstoff, beispielsweise einem Polyolefin, Hohlkugeln zugesetzt, so dass sich eine Verklebung dieser Kugeln zu einem schaumähnlichen Gesamtgebilde ergibt. Diese Masse kann dann im Spritzgussverfahren weiter verarbeitet werden. Der Nachteil dieses Verfahrens besteht jedoch darin, dass es relativ schwer zu kontrollieren ist, ob die Kugeln tatsächlich homogen im Werkstoff verteilt sind und dass darüber hinaus die vergleichsweise aufwendigen Kugeln dem Werkstoff zugemischt werden müssen. Ferner sind diese Kugeln auf Grund ihrer Gasfüllung komprimierbar, so dass die Einspritzdrücke während des Spritzgussverfahrens beschränkt sind oder die erzielbare Gewichtsreduktion auf Grund der Kompression der Kügelchen beschränkt ist. Darüber hinaus besteht bei hohen Einspritzdrücken die Gefahr eines erhöhten Memory-Effektes, wobei der Innendruck der Kugeln die Gefahr mit sich bringt, dass das Werkstück unkontrolliert in seiner Größe verändert wird.

Darüber hinaus ist es allgemein bekannt, aus leichtgewichtigen Vorformlingen, zum Beispiel in Form einer Schaumstoffplatte oder eines Kubus. Hier werden aus großen Platten zunächst kleinere, an die Form des späteren Werkstückes angepasste Stücke zugeschnitten, diese eventuell nochmals miteinander verklebt und dann in einer Form verpresst und erhitzt, so dass die Pressspannungen homogenisiert werden und die Formstabilität erreicht wird. Dieses Verfahren hat jedoch den Nachteil, dass bereits geschäumte Produkte in den Prozess eingeführt werden, so dass hohe Transportkapazitäten für die Beschaffung der Leichtschaumvorformlinge auftreten. Ferner ist das Handlung der Vorformlinge aufwändig und es fallen aufgrund der Umformung und Homogenisierung lange Prozesszeiten an. Schließlich ist auch nachteilig, dass hier große Abfallmengen infolge des Zuschneidens der Vorformlinge anfallen.

### Kurzbeschreibung der Erfindung

Aufgabe der Erfindung ist es daher, ein Verfahren zur Herstellung von Leichtbauwerkstücken mit einem Gewicht von maximal 200 ^{kg}/ₘ₃ zu schaffen, bei dem das Leichtbauwerkstück leicht und einfach herstellbar ist und als kostengünstiges Massenprodukt produzierbar ist. Ferner soll das Werkstück möglichst sortenrein herstellbar sein.

Diese Aufgabe wird nach der Erfindung durch ein Verfahren zur Herstellung von Leichtbauteilen aus aufgeschäumtem Kunststoff mit einem Volumengewicht zwischen 15 und 200 ^{kg}/_{m³} gelöst, dass die folgenden Verfahrensschritt aufweist:
- Plastifizieren eines Kunststoffmaterials, insbesondere eines Polymers,
- Zusetzen von Treibmittel zu dem plastifizierten Kunststoff,
- Einbringen einer Masse des mit Treibmittel versetzten Kunststoffs in eine Form, die in ihrem Gewicht derart auf das Innenvolumen der Form abgestimmt ist, dass sie dem Volumengewicht des herzustellenden Leichtbauteils entspricht,
- Aufschäumen des Kunststoffes durch Expansion des Treibmittels unter Formzwang,
- Entformen des Leichtbauteils aus der Form.

Das erfindungsgemäße Verfahren zur Herstellung der Leichtbauteile aus aufgeschäumtem Kunststoff kann in den verschiedensten Bereichen eingesetzt werden. Dies können Träger für andere Werkstücke sein, Träger für Verkleidungselemente oder Dekorationsfolien, Füllstücke, Stopfen, Tüllen für die Aufnahme von Kabeln oder sonstigen Bauelementen, stoßabsorbierende Elemente oder ähnliches. Diese Bauteile können in der Automobilindustrie oder im allgemeinen Maschinenbau eingesetzt werden. Auch eine Verwendung im Haushalt ist möglich. Im Sport- und Freizeitbereich können solche Bauteile als Schutzpolster, als Schwimmhilfe oder zum Füllen von Zwischenräumen eines Schutzhelmes genutzt werden. Auch im allgemeinen Haushalt oder in der allgemeinen Industrie bzw. der Medizintechnik und Bauindustrie sind solche Bauteile vielfältig, beispielsweise als Trittschalldämmung oder als Stützkissen verwendbar. Letztlich ist die Anwendbarkeit der Erfindung aber nicht auf diese Beispiele beschränkt.

### Beschreibung der Ausführungsarten

Die Leichtbauteile aus aufgeschäumtem Kunststoff können aus unterschiedlichen Werkstoffen sowie deren Abmischungen, Modifizierungen bzw. Additivzuschlägen bestehen. Geeignete Werkstoffe sind u. a. PE, PP, PVC, PS, PUR, PET, PES, PC, PA, PMMA, PEK, PEI, Gummi sowie entsprechende polare/unpolare Copolymere und vernetzte/unvernetzte Varianten. Vorzugweise werden Polyolefine, entsprechende Copolymere und vernetzte/unvernetzte Varianten eingesetzt. Als Vernetzung eigenen sich u. a. chemische -vorzugsweise durch Einsatz von Peroxiden, Silanen, Azo-Verbindungen- und Strahlenvernetzung -vorzugsweise durch Einsatz von Elektronen, beta-minus-Teilchen, Gammastrahlung und Röntgenstrahlung.

Bei den Schaumteilen kann es sich um komplexe, 3-dimensionale Körper oder auch einfache Grundkörper handeln. Aufgrund der Vielfalt der Einsatzbereiche und aufgrund der vielen verschiedenen Industrien gibt es auf dem Markt eine sehr große Anzahl von verschiedenen Anwendungsgebieten für Schaumteile.

Die einzelnen Schritte des Herstellungsverfahrens werden im Folgenden ausführlich beschrieben:

Zunächst wird auf geeignete Weise ein Kunststoff plastifiziert. Dies geschieht üblicherweise über eine Schnecke eines Extruders, in der durch Friktionswärme granulatförmiger Kunststoff, insbesondere in Form von Polymergranulat, aufgeschmolzen wird. Dieser Masse wird dann optional ein Vernetzungsmittel zugesetzt. Anschließend oder auch vor der Zugabe des Vernetzungsmittels kann dann das Treibmittel zugesetzt werden. Hierzu kann eine der folgenden Treibmittel-Beladungs-Techniken zur Anwendung kommen: Druckbeaufschlagung mit geeigneten Gasen, Einbringen von Flüssigkeiten oder Einbringen von chemischen Treibmitteln. Auch eine Kombination der genannten Techniken ist möglich, insbesondere, um den Treibmittelgehalt möglichst hoch zu treiben, was für besonders leichtgewichtige Kunststoffe erforderlich ist. Als Gas kann u.a. Stickstoff oder Kohlendioxid verwendet werden.

Hier kommen nun grundsätzlich zwei verschiedenen Verfahren zur Verarbeitung der mit Treibmittel beladenen Masse in Betracht. Zum einen kann die Masse unmittelbar weiterverarbeitet werden. Hierzu bietet sich insbesondere das Spritzgussverfahren an, wobei allerdings bei entsprechend gewählten Abzugsbedingungen auch eine Extrusion in Betracht kommen kann.

Beim Spritzguss wird die Masse in eine Form eingespritzt und dort nach dem Ausschäumen abgekühlt sowie anschließend entformt. Die Form kann zur Aktivierung des Treibmittels zusätzlich aufgeheizt sein oder es können angepasste Temperaturkurven "gefahren" werden, das heißt, die Form kann längs einer vorgegebenen Heiz oder Abkühlkurve aufgeheizt bzw. abgekühlt werden, um partiell oder über die gesamte Form das Treibmittel in Abhängigkeit von der Erstarrung des Kunststoffes aktivieren zu können. Zusätzlich können auch atmende und ziehende Werkzeuge eingesetzt werden.

Im Falle der Extrusion kann der aus der Düse austretende Kunststoff durch Aktivierung des Treibmittels aufgeschäumt werden. Hier kann ebenfalls Wärme angewandt werden, entweder durch langgezogene, beheizte Düsen oder durch nachgeschaltete Wärmestrahler. Abzugshilfen oder nachgeschaltete Kalander können hier zur weiteren Formgebung eingesetzt werden.

Eine weitere Verfahrensalternative sieht vor, das treibmittelbeladene Material zunächst zu einem Zwischenprodukt zu verarbeiten, das später weiter verarbeitet werden kann. Hier kommen wiederum zwei grundsätzliche Möglichkeiten in Betracht. Zum einen kann der Kunststoff über einen Extruder zu einem Granulat oder ähnlichem Zwischenprodukt verarbeitet werden. Hier wird zunächst ein Endlosstrang extrudiert, der dann, nach dem Einfrieren, in Granulatkörper zerteilt wird. Die Größe dieser Granulatkörper kann derjenigen der üblichen Kunststoffgranulate entsprechen, es können aber auch größere Körper, etwa Blöcke mit einer Ausdehnung von 3 bis 50mm³ oder mehr verwendet werden. Auch ist es nicht erforderlich, dass diese Blöcke eine bestimmte geometrische Grundform aufweisen, vielmehr können sie plattenförmig, kugelartig oder auch würfel- oder quaderförmig ausgebildet sein. Im Falle der granulatförmigen Zwischenprodukte muss natürlich der Formprozess zur Herstellung des Leichtbauteiles so ausgebildet sein, dass neben dem Aufschäumen auch zu einer Verbindung der einzelnen Granulate in der gewünschten Festigkeit bis hin zum Verscheißen der Kornoberflächen kommt.

Alternativ können über das Spritzgussverfahren auch andere Zwischenformlinge, insbesondere größere Körper in Quader- oder Plattenform, die eine größere Sicherheit vor schleichender Entgasung bieten können, hergestellt werden. Ferner kann der Vorformling auch bereits mehr oder weniger an die Form des späteren Produktes angepasst sein. So kann er bei komplexeren Bauteilen an die Skelettform oder die Materialhäufig innerhalb der endgültigen Form angepasst sein, so dass eine homogene Schaumverteilung beim Aufschäumen durch Minimierung der Materialverdrängungswege erleichtert wird. Schließlich ist es möglich, das Zwischenprodukt vor dem Einlegen in die Form zu bearbeiten oder für den Einsatz in mehreren Formen zu teilen. Beispielsweise kann der treibmittelbeladene Vorformling zur Anpassung an das Formenwerkzeug Nachformprozessen, zum Beispiel durch Hinterschneiden, Stanzen, Schneiden oder Tiefziehen, unterzogen werden.

Sollte wahlweise eine Strahlenvernetzung erforderlich sein, kann diese zu einem beliebigen Schritt innerhalb der Prozesskette erfolgen. Weitere Nachbearbeitungsschritte des Leichtbauteils können bei beiden Verarbeitungsmethoden, nämlich der unmittelbaren Herstellung aus plastifiziertem Kunststoff einerseits und der Herstellung eines Zwischenproduktes mit späterer Weiterverarbeitung andererseits notwendig oder zweckmäßig sein.

Durch das erfindungsgemäße Verfahren kann nun die Menge des Abfalls deutlich reduziert werden, da infolge des unmittelbaren Formens des Bauteils in der Form ein Zuschnitt vor der Verarbeitung oder des fertigen Bauteils nach dem Schäumen in der Regel entfallen kann oder deutlich reduziert ist. Ferner ist es nicht mehr notwendig, Vorprodukte mit großem Volumen zur Fertigung zu transportieren und dort zu zerteilen, was die Transportkosten erheblich senkt. Dennoch lässt sich nach der Erfindung ein Leichtbauteil herstellen, dass ein niedriges Volumengewicht aufweist.

Eine bevorzugte Ausgestaltung der Erfindung wird in einem Autoklaven umgesetzt. Ein solcher Autoklav enthält die auszuschäumende Form oder mehrere solcher Formen und kann Druckdicht abgeschlossen werden. In die Form wird dann zunächst die Kunststoffmasse bevorzugt in Granulatform eingebracht. Anschließend wird die Masse erhitzt, bis der Kunststoff erweicht, also bis die Plastifizierungstemperatur erreicht oder überschritten ist.

Die so innerhalb der Form erweichte Kunststoffmasse wird dann mit einem gasförmigen Treibmittel beaufschlagt, indem in dem Autoklaven die erweichte Kunststoffmasse bei Anwesenheit einer hinreichenden Gaskonzentration des Treibmittels unter Druck gesetzt wird. Dies bewirkt, dass das Gas in den Kunststoff eindringt und diesen durchsetzt. Nach einer hinreichend langen Haltedauer, während der der Druck erhöht, insbesondere auf konstantem Niveau gehalten bleibt, kann dann der Druck reduziert werden, so dass die treibmittelbeladenen Kunststoffmasse aufschäumt.

Damit das Material beim Schäumen nicht unnötig inhomogen wird bzw. der Kunststoff weite Fließwege innerhalb der Form während des Schäumens zurücklegen muss, kann die spätere Form des herzustellenden Körpers bereits beim Beladen der Form mit Granulat berücksichtigt werden. Hierzu wird an die Orte, an denen eine erhöhte Dicke des Formkörpers erzeugt werden soll, eine entsprechend größere Granulatmenge eingebracht. Damit das Abrutschen der einzelnen Granulatkörner diesen Vorteil nicht wieder teilweise zu Nichte macht, können die Granulatkörner auch adhäsiv gemacht werden, so dass sich die Grundform des späteren Formkörpers vorgeformt werden kann. Dieser Effekt kann über eine Vorerwärmung der Granulatkörper oder auch über eine Präparation mit einem klebrigen Bindemittel erfolgen.

Weitere Merkmale und Vorteile der Erfindung ergeben sich aus den Patentansprüchen.

## Patentansprüche

1. Verfahren zur Herstellung von Leichtbauteilen aus aufgeschäumtem Kunststoff mit einem Volumengewicht zwischen 15 und 200 ^{kg}/_{m³} mit den Verfahrensschritten: Plastifizieren eines Kunststoffmaterials, insbesondere eines Polymers, Zusetzen von Treibmittel zu dem plastifizierten Kunststoff, Einbringen einer Masse des mit Treibmittel versetzten Kunststoffs in eine Form, die in ihrem Gewicht derart auf das Innenvolumen der Form abgestimmt ist, dass sie dem Volumengewicht des herzustellenden Leichtbauteils entspricht, Aufschäumen des Kunststoffes durch Expansion des Treibmittels unter Formzwang, Entformen des Leichtbauteils aus der Form.

2. Verfahren zur Herstellung von Leichtbauteilen auf geschäumten Kunststoff nach Anspruch 1, **dadurch gekennzeichnet, dass** die plastifizierte Kunststoffmasse in einem Autoklaven zusammen mit Treibmittel solange bei erhöhter Temperatur, insbesondere in einem Bereich zwischen 150°C und 190°C und bevorzugt bei 170°C und einem Überdruck gehalten wird, bis der plastifizierte Kunststoff mit Treibmittel beladen ist und dass anschließend Druck im Autoklaven gesenkt wird, so dass die plastifizierte Kunststoffmasse aufschäumt.

3. Verfahren zur Herstellung von Leichtbauteilen auf geschäumten Kunststoff nach Anspruch 2, **dadurch gekennzeichnet, dass** in dem Autoklaven Kunststoffpartikel derart in die auszuschäumende Form eingebracht werden, in Bereichen einer hohen Form eine dickere Partikelschicht und in Bereichen einer niedrigen Form eine dünnere Partikelschicht eingebracht wird.

4. Verfahren zur Herstellung von Leichtbauteilen auf geschäumten Kunststoff nach Anspruch 3, **dadurch gekennzeichnet, dass** das Verhältnis der Höhe der Form und der Dicke der eingebrachten Schicht der Kunststoffpartikel über die Breite und Tiefe der Form möglichst gehalten wird.

5. Verfahren zur Herstellung von Leichtbauteilen auf geschäumten Kunststoff nach Anspruch 1, **dadurch gekennzeichnet, dass** der mit Treibmittel versetzte Kunststoff abgekühlt und zu einem Zwischenprodukt in Form von treibmittelbeladenem Granulat oder einem treibmittelbeladenem Vorformling verarbeitet wird.

6. Verfahren zur Herstellung von Leichtbauteilen auf geschäumten Kunststoff nach dem vorhergehenden Anspruch, **dadurch gekennzeichnet, dass** der Vorformling in einem Werkzeug ohne Aufschäumen des Kunststoffes geformt wird.

7. Verfahren zur Herstellung von Leichtbauteilen auf geschäumten Kunststoff nach einem der beiden vorhergehenden Ansprüche, **dadurch gekennzeichnet, dass** das Zwischenprodukt in einem Werkzeug durch Erhitzen plastifiziert und aufgeschäumt und nach dem Wiedererkalten entformt wird.

8. Verfahren zur Herstellung von Leichtbauteilen auf geschäumten Kunststoff nach einem der vorhergehenden Ansprüche, **dadurch gekennzeichnet, dass** zum Versetzen des plastifizierten Kunststoffes mit einem gasförmigen Treibmittel der Kunststoff unter Druck mit Gas beaufschlagt wird.

9. Verfahren zur Herstellung von Leichtbauteilen auf geschäumten Kunststoff nach einem der Ansprüche 1 bis 8, **dadurch gekennzeichnet, dass** als Treibmittel eine leicht verdampfbare Flüssigkeit verwendet wird und der plastifizierte Kunststoff mit dieser Flüssigkeit versetzt wird.

10. Verfahren zur Herstellung von Leichtbauteilen auf geschäumten Kunststoff nach dem vorhergehenden Anspruch, **dadurch gekennzeichnet, dass** die leicht verdampfbare Flüssigkeit Pentan, Hexal, Toluol oder Wasser ist.

11. Verfahren zur Herstellung von Leichtbauteilen auf geschäumten Kunststoff nach einem der Ansprüche 1 bis 10, **dadurch gekennzeichnet, dass** als Treibmittel ein chemisches Treibmittel verwendet wird.

12. Verfahren zur Herstellung von Leichtbauteilen auf geschäumten Kunststoff nach dem vorhergehenden Anspruch, **dadurch gekennzeichnet, dass** als chemisches Treibmittel Azo-, Diazo- oder N-Nitroso Verbindungen oder Sulfonylhydrazide, Carbonate oder Zitronensäure-Derivate verwendet werden.

13. Verfahren zur Herstellung von Leichtbauteilen auf geschäumten Kunststoff nach einem der vorhergehenden Ansprüche, **dadurch gekennzeichnet, dass** dem Kunststoff Vernetzungsmittel zugesetzt werden.

14. Vorformling zur Herstellung von Leichtbauteilen, insbesondere mit einem Volumengewicht zwischen 15 und 200 ^{kg}/_{m³}, **dadurch gekennzeichnet, dass** er durch Zusetzen von Gas unter Druck zu einer Kunststoffschmelze, insbesondere einer Polymerschmelze, und anschließendes Erstarren lassen dieser Schmelze hergestellt ist.

15. Granulat zur Herstellung von Leichtbauteilen, insbesondere mit einem Volumengewicht zwischen 15 und 200 ^{kg}/_{m³}, im Spritzguss, **dadurch gekennzeichnet, dass** das Granulat aus einzelnen Granulatkörpern besteht, die zumindest teilweise durch Zusetzen von Gas unter Druck zu einer Kunststoffschmelze, insbesondere einer Polymerschmelze, und anschließendes Erstarren lassen dieser Schmelze nach Spritzguss oder Extrusion sowie zerteilen der erstarrten Masse in Granulatkörper gasbeladen ist.
